# EUROPEAN PATENT APPLICATION

(11) **EP 3 840 392 A1**
(43) Date of publication of application: **23.06.2021**
(21) Application number: 20206256.8
(22) Date of filing: 05.09.2017
(51) Int. Cl.: H04N 21/2665, H04N 21/2668, H04N 21/214, H04N 21/458

(54) **METHOD AND APPARATUS FOR MULTIMEDIA CONTENT DISTRIBUTION**

(30) Priority: 08.09.2016 US 201662385104 P
(62) Divisional of application: 17768908.0
(71) Applicant: InterDigital CE Patent Holdings, 75017 Paris (FR)
(72) Inventor: RHOADS, Steven, C., Carmel, IN 46032 (US); WATTERS, Anthony, L., Westfield, IN 46074 (US); STRACHOTA, Douglas, P., Indianapolis, IN 46260 (US)
(74) Representative: AWA Sweden AB

(57) **Abstract**

A method (700) of providing multimedia content is described including providing (610) a first stream of multimedia content, determining (720) a data rate of the first stream, and providing (750) a second stream of multimedia content based on the data rate. An apparatus (110, 220) for providing multimedia content is described including a content processor (225, 600) operable to determine a data rate of a first stream of multimedia content, and a switch (227) coupled to the content processor and operable to provide the first stream of multimedia content, and provide a second stream of multimedia content in place of the first stream of multimedia content based on the data rate. A computer system (800), computer-readable storage mediums and non-transitory computer-readable program products for providing multimedia content are also described.

## Description

### CROSS-REFERENCE TO RELATED APPLICATION

This application claims the benefit of and priority to the U.S. Provisional Patent Application filed on September 8, 2016, Serial No. 62/385104 and titled "METHOD AND APPARATUS FOR MULTIMEDIA CONTENT DISTRIBUTION". The provisional application is expressly incorporated by reference herein in their entirety for all purposes.

### TECHNICAL FIELD

The present disclosure relates to multimedia content distribution and to switching multimedia streams or channels during content distribution.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Unlike analog home and office networks of the past, today's digital home, multi-dwelling unit (e.g., apartment complex, hotel, senior living facility, hospital, etc.) and office networks can distribute audio, video and data from one device to another, and can also support interactive dialogues between devices or between a device and the Internet. In particular, the advancement of low cost short range wireless communications has allowed many services to evolve and new services to be created within the home, multi-dwelling unit and office environment. The traditional personal computer (PC), mobile and consumer electronics (CE) domains are coming together and creating a melting pot of new interactive applications and interactive appliances blurring the boundaries of these traditional domains. For the consumer, service operators and device vendors, this evolution offers a continuous flow of new compelling applications, use cases and business opportunities which would be unthinkable in the past.

With the evolution and increase in the number of services, more and more multimedia content is provided from multiple sources. The increasing number of programs has made it difficult to navigate increasingly larger program guides (electronic or not) to find the best program to watch. Hence, for distribution of multimedia content in the home or office, by wireless or wired means, one may want to group different streams to satisfy personal preferences of a user and avoid the hassle of navigating a large program guide. In addition, multi-dwelling facilities, e.g., hotels, may have a limited number of channels to provide to their customers and may want to group different streams, e.g., combine programs from different streams into one stream, or switch between two or more streams, to provide the best service to their customers.

Therefore, there is a need to provide efficient techniques for providing multimedia content. The present disclosure is directed towards a technique that may help to improve efficiency of distribution.

### SUMMARY

According to an aspect of the present disclosure, a method is described including providing a first stream of multimedia content, determining a data rate of the first stream of multimedia content, and providing a second stream of multimedia content in place of the first stream of multimedia content based on the data rate.

According to an aspect of the present disclosure, an apparatus is described including a content processor operable to determine a data rate of a first stream of multimedia content, and a switch coupled to the content processor and operable to provide the first stream of multimedia content, and provide a second stream of multimedia content in place of the first stream of multimedia content based on the data rate.

According to an aspect of the present disclosure, an apparatus is described, the apparatus including a processor in communication with at least one input/output interface, and at least one memory in communication with the processor, the processor being configured to perform any of the embodiments of the method of providing multimedia content.

According to an aspect of the present disclosure, an apparatus is described including means for providing a first stream of multimedia content, means for determining a data rate of the first stream and means for providing a second stream of multimedia content in place of the first stream of multimedia content based on the data rate.

According to an aspect of the present disclosure, a non-transitory computer-readable program product is provided including program code instructions for performing any of the embodiments of the method described above.

According to an aspect of the present disclosure, a computer-readable storage medium carrying a software program is provided including program code instructions for performing any of the embodiments of the method described above.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

Additional features and advantages of the present disclosure will be made apparent from the following detailed description of illustrative embodiments which proceeds with reference to the accompanying figures.

### BRIEF DESCRIPTION OF THE DRAWINGS

The present disclosure may be better understood in accordance with the following exemplary figures briefly described below:
FIG. 1 illustrates a block diagram of an exemplary content distribution and communication network system in accordance with an embodiment of the present disclosure;
FIG. 2 illustrates a block diagram of an exemplary content distribution and communication network system within a customer's premises in accordance with an embodiment of the present disclosure;
FIG. 3 illustrates a block diagram of an exemplary set-top box device in accordance with an embodiment of the present disclosure;
FIG. 4 illustrates a simplified block diagram of a general communication system in accordance with an embodiment of the present disclosure;
FIG. 5 illustrates a block diagram of an exemplary sports program stream in accordance with an embodiment of the present disclosure;
FIG. 6 illustrates a simplified block diagram of a content processor in accordance with an embodiment of the present disclosure; and
FIG. 7 illustrates a flowchart of an exemplary method of providing multimedia content in accordance with an embodiment of the present disclosure.
FIG. 8 illustrates a block diagram of a computing environment within which aspects of the present disclosure can be implemented and executed.

### DETAILED DISCUSSION OF THE EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure is directed to techniques for distributing multimedia content, including video, audio and/or data which may help to improve efficiency of distribution. With the exponential increase in the number of multimedia services available on innumerous types of communication media (e.g., satellite, cable, landline telephone, wireless, Ethernet, etc.), more and more multimedia content is provided from multiple sources. The increasing number of programs has made it increasingly difficult to optimize one's experience by obtaining the best programs at any time. For example, it is not currently a simple task to navigate increasingly larger program guides (electronic or not) to find the best program to watch. Often times, a user starts its search and picks a program after a few seconds, not because it is the best choice, but because the user is not able or willing to devote any additional time to the task. Hence, for distribution of multimedia content in the home, office or other facilities, by wireless or wired means, one may want to group different streams to satisfy personal preferences of a user and avoid the hassle of navigating a large program guide.

In addition, multi-dwelling facilities, e.g., hotels, may have a limited number of physical channels to provide to their customers and may want to group different streams, e.g., combine programs from different streams into one stream, or switch between two or more streams, to provide the best service to their customers. A physical channel corresponds to one segment of the frequency spectrum of the medium over which the signal is transmitted.

In one example, a hotel may be interested in merging a popular channel (e.g., National Broadcast Channel, NBC) with a sports channel (e.g., American football), such that the program stream from the popular channel is normally viewed, but the service switches to the sports channel when there is a major sports event (e.g., weekend football games). For example, the satellite provider DirecTV™ offers a service called NFL Sunday Ticket, where a plurality of virtual channels or program streams may be offered, and each may be associated with at least one football game. Each virtual channel or program stream may include the particular football game(s) (e.g., Broncos versus Patriots at 4pm). It is well known that sports events like football demand high bit rates compared to other programs, due to high level of physical activity or movement. However, during the rest of the time, when the sports event is not provided, the program stream may include a still image and/or some music, or similar low bit rate program.

It may therefore be of interest to hotels and similar facilities to provide an easier experience for the customer or user by offering the sports events on popular channels, such that in times when sports events are not showing or not being provided, other interesting programs are being provided. Similarly, it may be of interest for any user in a home, office or other facilities (multi-dwelling or not) to perform similar merging of channel streams, whether sports, movies or other program streams, by switching between the streams based on a user's choice or preferences. In one embodiment, the new merged stream may be provided in a separate and newly created program stream representing the combination of more than one program stream. In one embodiment, the new merged stream may be a modified version of one of the original program streams by replacing one or more programs from the particular one of the original program streams with one or more programs from the other streams(s).

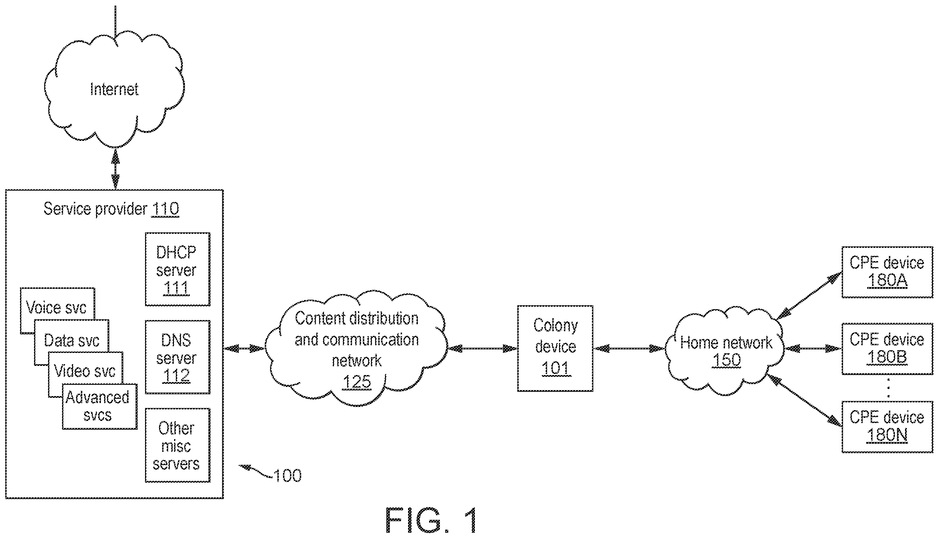

Turning to FIG. 1, a block diagram of a typical arrangement for a content distribution and communication network system 100 according to aspects of the present disclosure is shown. According to an exemplary embodiment, colony device 101 is an advanced receiver and transmitter system which may include a cable gateway, cable modem, DSL (Digital Subscriber Line) modem, router or the like, and is coupled to service provider 110 through content distribution and communication network 125 via at least one of a receiver circuit and a wide area network (WAN) interface. The content distribution and communication network 125 may be one or more of the possible communication and/or broadcast links including, but not limited to, coaxial cable, fiber optic cable, telephone line, or over the air links. The colony device 101 is also coupled to home network 150 which is coupled to one or more customer premises equipment (CPE) devices 180A-N. The home network 150 may include a wireless link but may also include wired links such as co-axial cable or Ethernet. CPE devices 180A-N may include, for example, personal computers, network printers, digital set-top boxes, and/or audio/visual media servers and players, among others.

Service provider 110 provides one or more services, such as voice, data, video and/or various advanced services, over content distribution and communication network 125 to CPE devices 180A-N through colony device 101 and home network 150. Service provider 110 may include Internet related services and server structures such as a Dynamic Host Configuration Protocol (DHCP) server 111 and Domain Name System (DNS) server 112, and may include other servers and services as well (e.g., video on demand, news, weather). It is important to note that these servers and services can be co-located or widely distributed, physically and/or virtually, in both hardware and software. It is contemplated that service provider 110 operates in a conventional manner in accordance with well-known protocols (e.g., Data Over Cable Service Interface Specification, DOCSIS).

The audio and video plus any signaling data and metadata content (e.g., electronic program guide, EPG, also known as program guide, or program metadata) may be supplied in at least one of two forms: broadcast form or video on demand (VOD) form, that is, content requested by the user. Program guide is an application used with digital set-top boxes and newer television sets to list current and scheduled programs that are or will be available on each channel and a short summary or commentary for each program. Content distribution and communication network (125) may include satellite link transmission from a national center to one or more regional or local centers, as well as local content delivery using local delivery systems such as over the air broadcast, satellite broadcast, or cable broadcast. Content distribution and communication network (125) may also incorporate Internet content into the delivery system via high-speed broadband communications.

Connectivity from the service operator or provider 110 to the customer's premises (home, multi-dwelling unit or office environment) via content distribution and communication network 125 may be accomplished via at least one medium, including cable/fiber, circuit switched or landline telephone, also known as Public Switched Telephone Network (PSTN), cellular or mobile telephone, satellite, over the air terrestrial broadcast, wireless cable over microwave (e.g., Multichannel Multipoint Distribution Services), other wireless networks, etc. Some networks like cable, PSTN (e.g., using Digital Subscriber Line, DSL or xDSL, technology) and cellular or mobile telephone networks permit full connectivity through duplex communication channels, including downstream and upstream channels. Downstream channels are used to transmit signals from the server, or service provider to the user or subscriber. Upstream channels are used to transmit signals from the user to the server. Satellite, over the air terrestrial broadcast and wireless cable service providers cannot provide duplex communication through their respective mediums and generally combine their downstream systems with upstream channels or services of other service providers (e.g., PSTN, cellular telephone, cable) to accomplish full connectivity to the customer's premises.

Service provider 110 may be more than one service provider, each providing a different service. In an illustrative application, service provider 110 may be, for example, a satellite based multiple service operator (MSO). The satellite based operator (e.g., DirecTV™) may include a video/audio downstream communication path and a PSTN based upstream path, as well as PSTN based internet connection (e.g., AT&T™).

Colony device 101 acts as the interface between content distribution and communication network 125 external to the customer's premises and the home network 150 located in the customer's premises. Colony device 101 receives a signal or converts transport data packets, such as packets in an IP protocol, from a format used in content distribution and communication network 125 to a format used in home network 150. Colony device 101 also routes data packets, including the converted data packets between the content distribution and communication network 125 and one or more devices on the home network. Colony device 101 may include interfaces for both wired networking (e.g., cable, Ethernet or Multimedia over Coaxial cable Alliance (MoCA)) and wireless networking (e.g., Bluetooth). Colony device 101 allows data, voice, video and audio communication between content distribution and communication network 125 and CPE devices 180A-N used in the customer's premises, such as analog telephones, televisions, computers, set-top boxes, digital video recorders (DVR), and the like.

It is important to note that in some configurations, colony device 101 may be partitioned into two or more separate devices coupled together in some communicative manner. A first device, connected to the broadcast portion of content distribution and communication network 125, may be referred to as a receiver. A second device connected to the WAN portion of the system may be referred to as a cable modem or network termination device (NTD). A third device, connected to the home LAN portion of the system, may be referred to as a home router, a home server, a home gateway, or a transmitter. Functionally, and as will be described below, the first, second and third devices operate in a manner consistent with colony device 101. The colony device may also be referred to as a home gateway. In an illustrative application, colony device 101 may include, for example, a cable broadcast based transmitter which broadcasts video, audio, voice and data to the various CPE devices 180A-N through the cable network within the customer's premises. In one embodiment, colony device 101 may include, for example, a wireless transmitter which broadcasts video, audio, voice and data to the various CPE devices 180A-N via a wireless network, e.g., Bluetooth, Institute of Electrical and Electronics Engineers (IEEE) 802.11, etc.

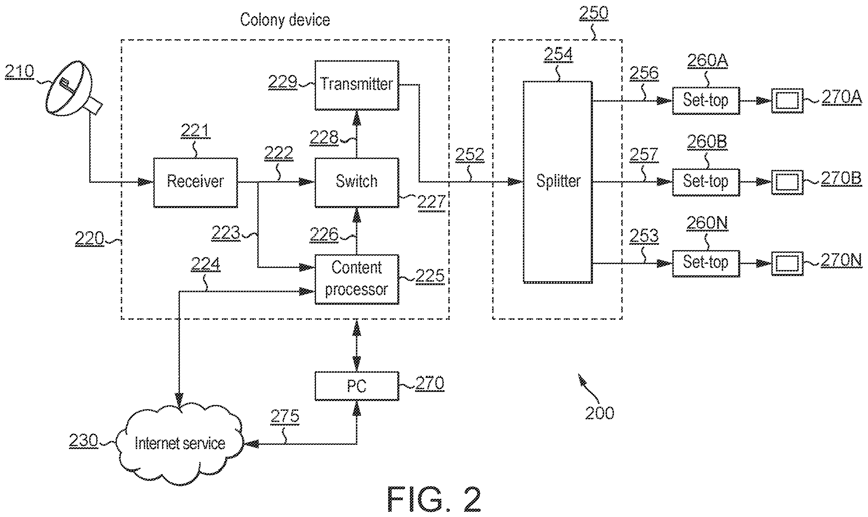

FIG. 2 illustrates a block diagram of an exemplary customer's premises content distribution and communication network system 200 according to aspects of the present disclosure. A satellite based service provider similar to service provider 110 transmits a satellite signal over a plurality of physical channels. Each physical channel corresponds to one segment of the frequency spectrum of the medium over which the signal is transmitted. For single carrier modulated systems, like satellite and cable systems, the term physical channel and carrier are used interchangeably, i.e., a physical channel is identified as one carrier of the physical spectrum. For example, in the US broadcast television system, each physical channel corresponds to 6 MHz of the frequency spectrum, or a 6 MHz bandwidth. For example, channel 2 in the US cable TV system is a 6 MHz bandwidth channel located at frequencies between 54 and 60 MHz, and may contain a plurality of virtual channels or program streams addressed as 2.1, 2.2, 2.3, etc. The satellite signal may be received by at least one satellite antenna 210 (including at least one Low Noise Block, LNB) coupled to colony device 220. Colony device 220 is similar to colony device 101, and is coupled to home network 250. Home network 250 may be a cable home network similar to home network 150, and may be coupled to one or more set-top boxes or receiver devices 260A, 260B and 260N. Set-top boxes 260A-N are similar to CPE devices 180A-N and are respectively coupled to TV sets or displays 270A, 270B and 270N. In addition, an internet or cloud based service 230, provided by a service provider similar to service provider 110, communicates with colony device 220, delivering video, audio and/or data content from the internet. Internet service 230 may be at least one of the innumerous services available on the internet, for example, a social network like Sherish™, Facebook™, Twitter™, Youtube™, Instagram™, etc., or a video on demand service like Netflix™, Amazon™, etc.

In one exemplary embodiment of the present disclosure, the customer's premises may be a hotel facility. In one embodiment, the customer's premises may be a home with various rooms, with at least one set-top box or receiver device and TV or display device used by individual(s) living in the home. In one embodiment, the customer's premises may be a senior living facility, a hospital, a high-rise building, or an apartment complex, with a plurality of rooms, condos, or apartments inhabited by a plurality of individuals.

Colony device 220 may include at least one receiver circuit 221 that demodulates, decodes and possibly decrypts the satellite input signal output from the LNB. Receiver 221 may be any of the well-known receiver circuits by one of ordinary skill in the art. Receiver 221 produces a transport stream 222 including packets according to one of the known standard formats and including at least one program stream. A transport stream is a standard container format for transmission and storage of audio, video, and ancillary data, e.g., Program Specific Information (PSI) data, Program and System Information Protocol (PSIP) data, Digital Video Broadcasting Service Information (DVB-SI) data, etc. The PSI data is the Moving Picture Experts Group (MPEG) 2 standard data that identifies what parts of the transport stream belong to a particular program. It provides information to enable automatic configuration of the receiver to de-multiplex and decode the various streams of programs within the multiplex. The PSIP data provides an Advanced Television Systems Committee (ATSC) extension to MPEG 2 for service information. It provides identification of streams associated with a program and time of day information. It provides sufficient data for a program guide function, and is structured such that a broadcaster may provide data independently for his own service (in which case the receiver can assemble a guide from several sources), or in cooperation with other broadcasters. DVB-SI provides corresponding service information for the DVB standard. The transport stream format may be the MPEG transport stream (TS) format. The transport stream may include multiple program streams, i.e., a plurality of multiplexed data, video and audio programming streams from the satellite provider to be distributed to the customer's premises. The program streams are bundled in groups where each group is associated with one physical channel. For example, it is common to have 3 concurrent Standard Definition (SD) digital program streams (or equivalently, 3 virtual channels), or 1 High Definition (HD) program stream per physical channel. Receiver 221 is coupled to content processor 225 over, e.g., an Ethernet link 223. In one embodiment, receiver 221 includes a Quadrature Phase Shift Keying (QPSK) demodulator. In one embodiment, decoding includes channel or error correction decoding.

Colony device 220 may also include content processor 225 coupled to receiver 221 and receiving the transport stream 222 output by receiver 221, including at least one program stream. Content processor 225 may also include a web browser (not shown) and communicate with internet service 230 over, e.g., an Ethernet link 224, receiving video, audio and/or data content from the internet. Content processor 225 may, for example, receive data from internet service 230 including a number of personal pictures, or even a number of slide shows of personal pictures e.g., from a plurality of Sherish™ accounts. Content processor 225 may also receive a number of personal video clips (including audio), e.g., from a plurality of Instagram™ accounts, or Youtube™. Content processor 225 may also receive general multimedia content, including downloadable and streaming video and audio content, e.g., from Amazon™ or Netflix™ accounts. The video content may be encoded with, e.g., MPEG-2 or High Efficiency Video Coding (HEVC), and the audio content may be encoded with, e.g., MPEG-1 layer 2 or Dolby's Digital Audio Codec 3 (AC-3).

Content processor 225 may also be coupled to switch 227 over, e.g., an Ethernet link 226. Switch 227 may be implemented as a digital switching circuit. Switch 227 may also be coupled to receiver 221 and receive the transport stream 222 output by receiver 221, including at least one program stream. Switch 227 may also receive at least one program transport stream received from internet service 230. In one embodiment, the at least one program stream received from internet service 230 may be received via content processor 225. Switch 227 may be coupled to transmitter 229 over, e.g., an Ethernet link 228. Switch 227 may assign the plurality of physical channel representative transport streams present in the modified transport stream to a corresponding plurality of physical channels in transmitter 229, not necessarily in the same order. For example, physical channel 1 received by receiver 221 may become physical channel 15 transmitted by transmitter 229. In addition, the number of physical channels in transmitter 229 may be smaller than the number of physical channel representative transport streams out of content processor 225. However, it is to be understood that, for program guide purposes, the information contained in the program guide must match the physical channels assigned to the various transport streams, so appropriate changes in the PMT may need to be made for the receiver to make the necessary channel changes. Different concurrent program streams are allocated to different virtual channels, as previously mentioned. In the program guide, different concurrent program streams or virtual channels are also allocated to different program guide channels (or different program guide major and minor channels, if the numbering has a major and minor number, e.g., 10.1). In general, there is a relation between the program guide channel numbers and the physical and virtual channel number, but the two numbering systems may be quite distinct. However, different concurrent program streams generally appear in a program guide as different program guide channel numbers.

In one embodiment, switch 227 may be directly coupled to receiver 221 over, e.g., an Ethernet link and transfers the output transport stream from receiver 221 to transmitter 229. In one embodiment, switch 227 may be optional. In one embodiment, switch 227 may be removed or bypassed and the program transport streams are processed in the content processor 225 (e.g., combining programs from more than one stream into a single stream) and assigned to the various physical channels provided to transmitter 229.

As previously mentioned, the present disclosure aims at distributing or providing multimedia content, including video, audio and/or data. In one example, a hotel may be interested in merging a popular channel stream (e.g., National Broadcast Channel, NBC) with a sports channel stream (e.g., American football), such that the program stream from the popular channel is normally viewed, but the service switches to the sports channel when there is a major sports event (e.g., weekend football games). In one embodiment, the operation of merging at least two program streams or switching between at least two program streams may be performed by the content processor 225 and optionally switch 227 as will be described in further detail below. In one embodiment, switch 227 and content processor 225 may be combined into one component.

Transmitter 229 may be a transmitter circuit well-known by those skilled in the art that encodes and modulates the modified and switched transport stream out of switch 227. In one embodiment, transmitter 229 may be a cable transmitter. In one embodiment, transmitter 229 may include a Quadrature Amplitude Modulation (QAM) modulator. In one embodiment, encoding includes channel or error correction encoding. In one embodiment, transmitter 229 may also encrypt the transport stream prior to encoding and modulating. In one embodiment, transmitter 229 may decrypt the transport stream and then re-encrypt the transport stream with a different encryption system, prior to encoding and modulating the transport stream. For example, transmitter 229 may decrypt DirectTV™ VideoGuard encryption present in the transport stream from receiver 221 and re-encrypt the transport stream in Zenith™ Pro:Idiom encryption.

Transmitter 229 may transmit the modulated switched transport stream as a broadcast radio frequency (RF) signal over cable network 250. Cable network 250 may include coaxial cables 252, 256-258 and splitters 254, and may also include amplifiers (not shown). Cable network 250 couples transmitter 229 to a plurality of set-top boxes or receiver devices 260A, 260B and 260N which each receive the broadcast RF signal. The set-top boxes 60A, 260B and 260N are each coupled to a TV or display device 270A, 270B and 270N, respectively. Each set-top box may be coupled to a TV or display device via a High-Definition Multimedia Interface (HDMI).

It is to be understood that several components necessary for complete operation of the system are not shown in the interest of conciseness, as they are well known to those skilled in the art. While embodiments of the invention utilize, QPSK demodulators, QAM modulators and MPEG-2 transport streams, it will be appreciated by those skilled in the art that other kinds of modulators and demodulators are equally usable and many different types of transport protocols are also usable. Therefore, Vestigial Sideband (VSB) modulators/demodulators, QPSK modulators/demodulators, Orthogonal Frequency Division Multiplexing (OFDM) modulators/demodulators, and their equivalents are all covered by the current invention. Moreover, Internet Protocol (IP) signaling transport streams, Digital Video Broadcasting (DVB) transport streams, MPEG-4 transport streams, Association of Radio Industries and Businesses (ARIB) transport streams, and their equivalents are also covered by the present disclosure.

Colony device 220 may be controlled by an internal controller (not shown). The controller may be implemented as a circuit or may include a processor and at least one memory. The at least one memory may be a RAM and/or ROM capable of carrying instructions to be executed by the processor. Colony device 220 may also include a storage device (not shown), e.g., a Hard Disc Drive (HDD) for voice, audio, video and data storage. Colony device may also include a modem (not shown), e.g., a cable modem or xDSL modem for access to the internet. In one embodiment, the components of colony device 220 may be coupled to the processor and the at least one memory. The processor may monitor and control the various hardware components for implementing the functions of the components. In another embodiment, the processor may execute software to perform various functions for the components. In one embodiment, the processor, at least one memory and/or storage device may be included in the content processor 225. In one embodiment, the components of colony device 220, including receiver 221 content processor 225, switch 227 and transmitter 229 may be implemented in software, executed by the processor and residing in the at least one memory.

Optionally, a PC 270 may interface with colony device 220 to access the internet, to set up parameters and/or control the data programming necessary to accomplish the control operations. PC 270 may be any of well-known computing devices, e.g., a laptop, tablet, desktop, smart phone, etc. PC 270 may be coupled to internet service 230 over, e.g., an Ethernet link 275.

It is to be understood that receiver 221 may be optional and may be removed from colony device 220. In this case, the network only includes one service, that is, internet service 230 providing personal content to colony device 220. Colony device 220 may merge the various program streams from internet service 230 to create a transport stream to be transmitted over home/cable network 250 by transmitter 229.

It is to be understood that the various blocks of colony device 220 may be implemented as separate devices, or a combination of them may be implemented as separate devices. For example, in one embodiment, switch 227, content processor 225 and controller (not shown) may be implemented as one separate device. In one embodiment, content processor 225 and transmitter 229 may be implemented as one separate device. In one embodiment, content processor 225, controller (not shown) and transmitter 229 may be implemented as one separate device.

It is to be understood that changes in format may be performed for the transport stream from the receiver 221 in order to be compatible with transmitter 229, particularly when receiver 221 and transmitter 229 are compatible with different respective standards. The change in format may affect the video, audio, and signaling data, e.g., program guide. The format conversion may be performed by content processor 225.

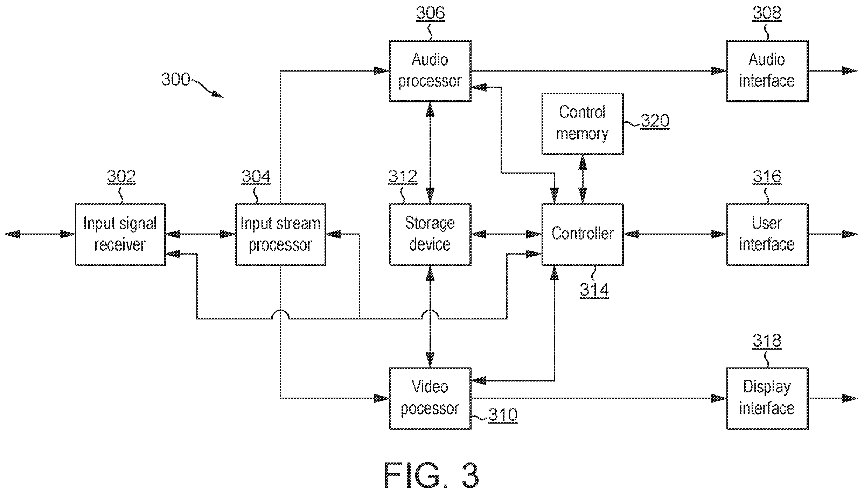

Turning now to FIG. 3, a block diagram of an embodiment of the core of a set top box/digital video recorder (DVR) or receiver device 300 is shown according to aspects of the present disclosure. Set-top box 300 may be similar to set-top boxes 260A, 260B and 260N described in FIG. 2, and CPE devices 180A, 180B and 180N described in FIG. 1. The device 300 shown may also be incorporated into other systems including the display device 270A, 270B or 270N. In either case, several components necessary for complete operation of the system are not shown in the interest of conciseness, as they are well known to those skilled in the art.

In device 300 shown in FIG. 3, the content may be received in input signal receiver 302. Input signal receiver 302 may be one of several known receiver circuits used for receiving, demodulating, and decoding signals provided over one of the several possible networks including over the air, cable, satellite, Ethernet, fiber and phone line networks. The desired input signal may be selected and retrieved in input signal receiver 302 based on user input provided through a control interface (not shown) or controlled by controller 314. The decoded output signal may be provided to input stream processor 304 that is coupled to input signal receiver 302. Input stream processor 304 may perform the final signal selection and processing, and may include separation of video content from audio content for the content stream. Input stream processor 304 may be coupled to audio processor 306 and video processor 310.

The audio content from input stream processor 304 may be provided to audio processor 306 for conversion from the received format, such as compressed digital signal, to an analog waveform signal and may include decompressing the audio content (e.g., according to MPEG-1 layer 2 or AC-3 standard). The analog waveform signal may be provided to audio interface 308 and further to the display device (similar to 270A, 270B or 270N) or an audio amplifier (not shown). Alternatively, audio interface 308 may provide a digital signal to an audio output device or display device using an HDMI cable or alternate audio interface such as via a Sony/Philips Digital Interconnect Format (SPDIF). Audio processor 306 may also perform any necessary conversion for the storage of the audio signals.

The video output from input stream processor 304 may be provided to video processor 310. The video signal may be one of several formats. Video processor 310 may provide, as necessary, a conversion of the video content based on the input signal format, and may include decompressing the video content (e.g., according to MPEG-2 or HEVC standard). Video processor 310 may also perform any necessary conversion for the storage of the video signals.

Storage device 312 may be coupled to audio processor 306 and/or video processor 310, and may store audio and/or video content received at the input. Storage device 312 allows later retrieval and playback of the content under the control of a controller 314 and also based on commands, e.g., navigation instructions such as fast-forward (FF) and rewind (Rew), received from a user interface 316. The storage device 312 may be a hard disk drive, one or more large capacity integrated electronic memories, such as static random access memory, or dynamic random access memory, or may be an interchangeable optical disk storage system such as a compact disk drive or digital video disk drive.

The converted video signal, from the video processor 310, either originating from the input or from the storage device 312, may be provided to the display interface 318. The display interface 318 may further provide the display signal to a display device of the type described above. The display interface 318 may be an analog signal interface such as red-green-blue (RGB) or may be a digital interface such as HDMI.

Controller 314 may be coupled via a bus to several of the components of the device 300, including input signal receiver 301, input stream processor 302, audio processor 306, video processor 310, storage device 312, and user interface 316. Controller 314 manages the conversion process for converting the input stream signal into a signal for storage on the storage device or for display. Controller 314 also manages the retrieval and playback of stored content. Controller 314 may be further coupled to control memory 320 (e.g., volatile or non-volatile memory, including RAM, dynamic RAM, ROM, programmable ROM, flash memory, EPROM, EEPROM, etc.) for storing information and instruction code for controller 314. Further, the implementation of the memory may include several possible embodiments, such as a single memory device or, alternatively, more than one memory circuit connected together to form a shared or common memory. Still further, the memory may be included with other circuitry, such as portions of bus communications circuitry, in a larger circuit.

It is to be understood that receiver device 300 may include display functionality (270AN). In addition, receiver device 300 may be, but is not limited to: a television, a set-top box, a digital video recorder (DVR), a computer, a smart phone, an automobile receiver and a tablet.

In one embodiment according to the present disclosure, device 300, upon start-up or a request by a user, may perform a channel scan or search to identify or determine all the available channels in the spectrum of the transmission medium. The channel scan or search may be performed by input signal receiver 302 and/or input stream processor 304 under the control of controller 314. Identifying available channels may include locking to (e.g., carrier and/or symbol timing lock) and demodulating the input signal for a physical channel of the spectrum. The scan may be performed by input signal receiver 302 at the control of controller 314. Identifying available channels may also include processing the stream and recovering the PMT and/or program guide data for available programs, at input stream processor 304. Identifying available channels may also include analyzing the PMT data at input stream processor 304 to identify video and/or audio streams available for display. Identifying or determining video and/or audio streams available for display may include determining if their respective stream types included in the PMT data are recognized by device 300.

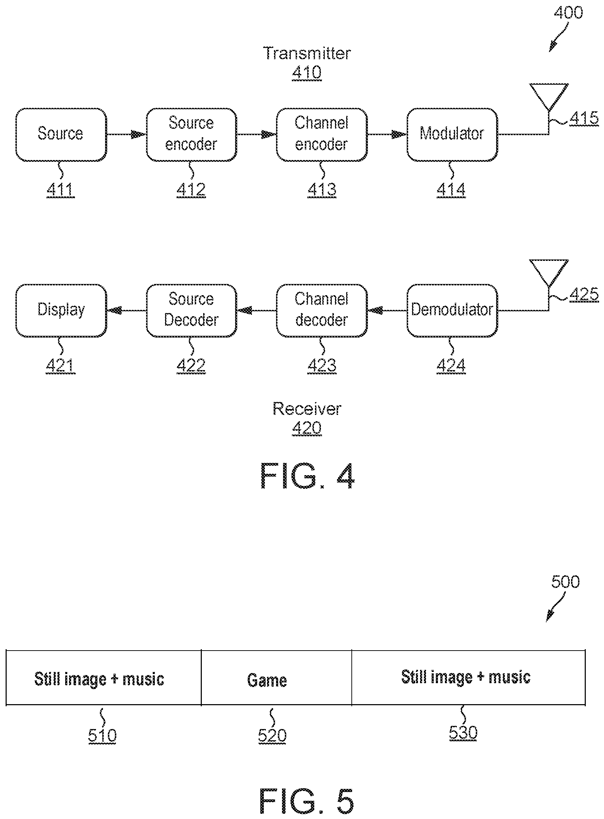

FIG. 4 illustrates a simplified block diagram of a general communication system 400 according to the present disclosure, describing a general transmitter and receiver (similar to set-top box 260A-N, 300, CPE devices 180A-N). Transmitter device 410 may include the following components:
i. Source 411 for the audio, video, signaling or control and other ancillary data (e.g., program guide). It is to be understood that some transmission systems are not co-located with the source and may just receive the necessary streams from a source (e.g., transmitter 229);
ii. Source encoder 412 coupled to source 411, that may include audio and/or video encoders to compress the audio (e.g., with MPEG-1 layer 2 or AC-3 compression standard) and/or video data (e.g., with MPEG-2 or HEVC compression standard);
iii. Channel encoder 413 coupled to source encoder 412 that may include at least some of the functions of randomizing, interleaving, channel coding (e.g., convolutional or block encoder) and frame mapping to process the compressed, signaling and ancillary digital data for robustness and to add levels of error correcting encoding functionality;
iv. Modulator 414 coupled to channel encoder 413 to convert the processed digital data into modulation symbols, which can be, for example, QAM or QPSK modulation symbols. In addition, the modulator may include the functionalities of filtering and/or digital-to-analog (D/A) conversion; and
v. Output interface 415 coupled to Modulator 414 that interfaces to the transmission medium and may represent the functionalities of up-conversion, RF amplification and/or over-the-air broadcasting (optional). It is to be understood that some transmission systems (e.g., cable system 200) are not over-the-air and do not require antennas.

At the receiver device 420 of communication system 400, the inverse functions of transmitter device 410 are generally performed, including the following components:
i. Input interface 425 that interfaces to the transmission medium and may represent the functionalities of over-the-air reception (optional), RF down-conversion and/or tuning. It is to be understood that some transmission systems (e.g., cable system 200) do not require antennas;
ii. Demodulator 424 coupled to input interface 425 to recover the digital data from the modulation symbols and may include the functionalities of analog-to-digital conversion (D/A), gain control, carrier and symbol timing recovery, equalization and/or header or preamble sync detection;
iii. Channel decoder 423 coupled to modulator 422 to recover the compressed and ancillary data by performing the inverse functionalities of the channel encoder, and may include error correcting decoding, de-interleaving and/or de-randomizing;
iv. Source decoder 422 coupled to channel decoder 423 to decompress the audio and/or video data, and may include video and/or audio decoders (e.g., similar to video processor 310 and audio processor 306); and
v. Display device 421 coupled to source decoder 422 for audio and/or video viewing. It is to be understood that the display device 421 may be external to some receiver devices (e.g., set-top box 260A-N and 300).

It is to be understood that receiver 221 and input signal receiver 302 may include the functionalities associated with input interface 425, demodulator 424 and channel decoder 423. It is to be understood that transmitter 229 may include the functionalities associated channel encoder 413, modulator 414 and output interface 415. One of ordinary skill in the pertinent art will appreciate that a source encoder 412 and a channel encoder 413, although common in general communications systems, are not essential for a system according to the present disclosure. Similarly, depending on the transmitter, a source decoder 422 and a channel decoder 423, although common in general communications systems, are not essential for a system according to the present disclosure. In addition, the transmitter and receiver may not require an antenna, if the transmission system is other than over-the-air (e.g., over cable). Furthermore, a receiving device may include, but is not limited to: a television, a set-top box, a digital video recorder (DVR), a computer, a smart phone, an automobile receiver and a tablet.

FIG. 5 illustrates a block diagram of an exemplary sports program stream 500 as a function of time in accordance with an embodiment of the present disclosure. Program stream 500 includes a football game program 520, which is the program of interest to the user, and programs 510 and 530 that include a still image and, optionally, accompanying music, and is the program not of interest to the user. Programs 510 and 530 happen before and after the football game 520, respectively. Sports program stream 500 may be similar to a DirecTV™ NFL Sunday Ticket stream. More generally, program of interest 520 may be any high bit rate program, that is, a program for which the bit rate is higher than the bit rate of programs 510 and 520. Programs not of interest 520 and 530 may be any low bit rate program, that is, programs for which the bit rate is lower than the bit rate of program 510.

In one embodiment of the present disclosure, in order to merge or combine program stream 500 with a second program stream, switch 227 may initially provide content processor with the program stream 500 and switch or replace the program stream 500 with the second program stream upon the occurrence of a time event. Once switch 227 is providing program stream 500 and the football game 520 is being provided, content processor 225 is to determine the occurrence of a time event after which to switch to the second program stream. The occurrence of the time event to switch to the second program stream may be checked and determined in content processor 225, and a flag, instruction or control signal 226 may be sent to switch 227 to perform the switch or replacement of the program stream 500 with the second program stream. For example, the control signal 226 may start at a value of 0 and may transition to a value of 1 when the time event is detected. Other values may be possible without departing from the scope of the present disclosure. In one embodiment, the time event to switch may be the time when the football game, or in general, program 520, is scheduled to end. The scheduled end time may be present in the program guide associated with the stream 500. In one embodiment, the time event may be the end of a time period after the scheduled end of the program 520. The time period may be, e.g., one hour.

In one embodiment, the time event may be a time when the data rate of program stream 500 substantially decreases, since the football game is a high bit rate program (e.g., 1 Mbps) and the subsequent program 530, which may include just a still image and possibly music, is a low bit rate program (e.g., 100K bits per second, Kbps). A substantial decrease may represent a decrease in data rate by at least an amount, e.g., by 200 Kbps. Also, a substantial decrease may represent a decrease by a percentage value, e.g., by 20%. A substantial decrease may represent a decrease of data rate by a factor, e.g., a factor of 1/2. A substantial decrease may represent a decrease in data rate below a threshold value, e.g., below 500 Kbps. A substantial decrease may represent a decrease below a first threshold and above a second threshold, e.g., a decrease below 1 Mbps and above 100 Kbps.

Content processor 225 may process program stream 500 to determine the data rate. In addition, content processor 225 may determine whether the data rate of program stream 500 has substantially decreased. If content processor 225 determines that the data rate of program stream 500 has substantially decreased, content processor 225 may set a flag, instruction or control signal 226 for switch 227 to replace the program stream 500 with the second program stream. Otherwise, if content processor 225 determines that the data rate of program stream 500 has not substantially decreased, no action is taken by content processor 225 and switch 227 continues to provide the program stream 500 at its output.

In one embodiment, the flag or instruction sent by the content processor 225 may also indicate to switch 227 which program stream is to replace program stream 500 at the end of the program of interest 520. In one embodiment, the program stream that replaces program stream 500 is chosen from a list. In one embodiment, the user chooses the program stream that replaces program stream 500. In one embodiment, the user may be given the option to accept or reject the switch operation via an upstream channel in which the user communicates with the colony device 220.

In one embodiment, more than one time event may be checked in content processor 225 in order to determine a transition from one program stream to another program stream. For example, in order to transition from program stream 500 to a second program stream, content processor 225 may check if the data rate has substantially decreased and in addition, content processor 225 may check for another time event. The other time event may be the end of a time period after the scheduled end of the program 520 (e.g., a time period of one hour).

In one embodiment of the present disclosure, in order to merge or combine program stream 500 with a third program stream, switch 227 may initially provide content processor with the third program stream and switch or replace the third program stream with the program stream 500 upon the occurrence of a time event. In one embodiment, the third program stream may be the second program stream mentioned above. The occurrence of the time event to switch to program stream 500 may be checked and determined in content processor 225, and a control signal, flag, instruction 226 may be sent to switch 227 to perform the switch or replacement of the third program stream with the program stream 500. For example, the control signal 226 may start at a value of 0 and may transition to a value of 1 when the time event is detected. Other values may be possible without departing from the scope of the present disclosure. In one embodiment, the time event may be the time when program 520 (e.g., the football game) is scheduled to begin. The scheduled beginning time may be present in the program guide associated with the stream 500. In one embodiment, the time event may be the last end of a program in the third program stream before the time when program stream 500 is scheduled to begin. The scheduled last end of program time may be present in the program guide associated with the third stream.

In one embodiment, the time event may be a time when the data rate of program stream 500 substantially increases, since the program 510, including just a still image and possibly music, is a low bit rate program (e.g., 100K bits per second, Kbps) and the football game is a high bit rate program (e.g., 1 Mbps). A substantial increase may represent an increase in data rate by at least an amount, e.g., by 100 Kbps. Also, a substantial increase may represent an increase by a percentage value, e.g., by 500% or equivalently, by a factor of 5. Moreover, a substantial increase may represent an increase in data rate above a threshold value, e.g., above 500 Kbps.

Content processor 225 may process program stream 500 to determine the data rate. In addition, content processor 225 may determine whether the data rate of program stream 500 has substantially increased. If content processor 225 determines that the data rate of program stream 500 has substantially increased, content processor 225 may set a control signal, flag or instruction 226 for switch 227 to replace the third program stream with program stream 500. Otherwise, if content processor 225 determines that the data rate of program stream 500 has not substantially increased, no action is taken by content processor 225 and switch 227 continues to provide the third program stream at its output.

In one embodiment, the choice of the second (third) program stream on which to switch from (to) program 520 may be made by a user. In one embodiment, a list of possible second (third) program streams may be created in advance. In one embodiment, the control signal, flag or instruction 226 sent by the content processor 225 may indicate to switch 227 which program stream is the second (third) program stream. In one embodiment, the user may be given the option to accept or reject the switch operation via an upstream channel in which the user communicates with the colony device 220. In one embodiment, a second (third) program stream is chosen if the second (third) program stream is not currently being watched by a user and the user's receiver 260A-N, 300 sends a communication to colony device 220 via an upstream communication channel in home network 150, 250. In one embodiment, a second (third) program stream is chosen if the second (third) program stream is currently being watched by a user.

It is to be understood that the described substantial increase in data rate of program stream 500 is associated with the beginning of the program of interest, program 520. In addition, the described substantial decrease in data rate of program stream 500 is associated with the end of the program of interest 520. In one embodiment, the content of program stream 500, particularly of program of interest 520 may be different from the content of the second program stream or third program stream, that is, the streams are not higher or lower bit rate versions of each other.

In one embodiment, the program of interest 520 in program stream 500 may not be a football game. It may be another game or sports event, for example, a baseball game or an Olympic event. In one embodiment, the program of interest 520 in program stream 500 may be a movie or any higher bit rate program than the program not of interest 510.

In one embodiment, program stream 500 may include other programs. For example, the program of interest 520 may be a low rate program, e.g., a slide show of personal pictures, or audio of a song. And the programs not of interest 510 may be a higher rate program, e.g., a movie. For such an example, the substantial increase in data rate happens at the end of the program of interest 520 and the substantial decrease in data rate happens at the beginning of the program of interest 510. The operation of the content processor 225 and switch 227 would then take these opposing aspects in consideration, without distracting from the principles of the present disclosure.

One issue to consider is the possibility of transmission issues associated with communication channel conditions, e.g., rain fade during a broadcast by a satellite provider, or a poor internet connection. The program stream 500 may have intermittent issues that may be perceived at the colony device 220 (and by extension, at content processor 225) as a substantial decrease in bit rate. The intermittent issues are only a problem when a high data rate program stream is being provided by switch 227 and content processor 225 is processing the program stream 500 to detect a substantial decrease or drop in the data rate. In order to avoid a hard switch out of the program of interest 520 due to possible intermittent transmission issues, a state machine may be added to content processor 225 to introduce a level of hysteresis in the determination of the time event of transition to a third program stream. In one embodiment, content processor 225 may calculate an average data rate over a running window of time period. For example, a data rate may be computed for a window of 1 second, every second. Therefore, the calculated or determined data rate is an average data rate over a 1 second period. For example, the data rate may be computed for a window of 2 seconds, every second, using the previous two seconds of data.

In one embodiment, the data rate may be calculated or determined for each consecutive period of time (e.g., 1 second), and a transition in the program stream 500 is only detected after M consecutive periods satisfy the transition rule. For example, the transition may be detected after the transition rule is satisfied for X minutes (e.g., 1 or 5 minutes). In one embodiment, the data rate may be calculated for each of N consecutive periods of time and a transition in the program stream 500 is only detected after any M periods out of N consecutive periods of time satisfy the transition rule. The transition rule is one of the rules previously described for a substantial increase or a substantial decrease in the data rate.

In one embodiment, calculated data rate values of very low or zero data rate may be discarded or disregarded from consideration if these calculated values are preceded and succeeded by much higher values. The very low or zero data rate value is an outlier data rate value, i.e., an observation point or sample that is distant from other observations. The outlier data rate value may be indicative of loss of signal or strong channel impairment during the transmission of a high data rate program of interest (e.g., program 520), and may therefore be disregarded.

In one embodiment, calculated data rate values of very low or zero data rate may be discarded from consideration if the calculated values are not close to the scheduled end of the program. For example, unless a much lower calculated data rate value occurs within 1 minute from the scheduled end of a program of interest (e.g., program 520) or beyond the scheduled end, it is assumed that a very low data rate calculation may be disregarded.

In one embodiment, if a signal interruption is detected for a substantial period of time (e.g., a zero or near zero data rate for more than 10 seconds), the content processor 225 may transition to from a current program stream (i.e., currently being provided by switch 227) to another program stream, regardless of the current program stream being the program stream 500, the second program stream or the third program stream.

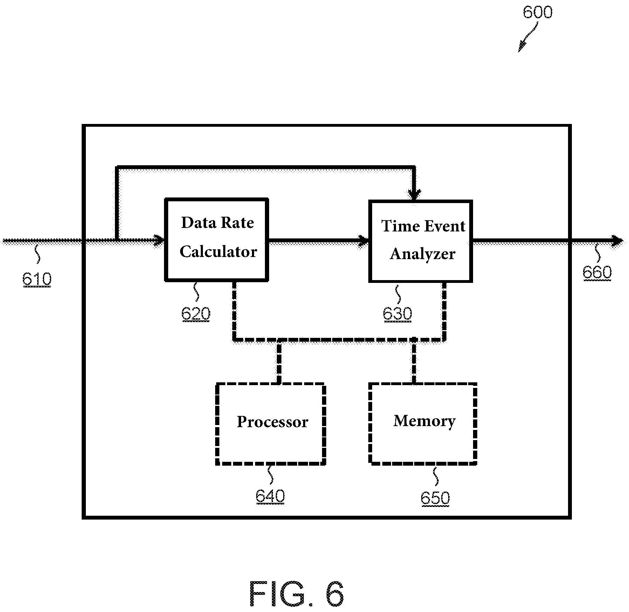

FIG. 6 illustrates a simplified block diagram of a content processor 600 similar to content processor 225 emphasizing the operations described above associated with determining the data rate and determining the occurrence of a time event. Content processor 600 includes a data rate calculator 620 coupled to a time event analyzer 630. Content processor 600 receives at least one program stream 610 at its input (e.g., program stream 500) and outputs a control signal, flag or instruction 226, 660 to a switch (e.g., switch 227) with instructions to switch between program streams. Content processor 600 may also output program streams to a switch (e.g., switch 227), either received from a broadcast transmitter (e.g., 223) or from an internet service (e.g., 224). Content processor 600 may further include a modem (not shown) to connect to the internet service (e.g., internet service 230). Data rate calculator 620 may be any of well-known circuits that calculate a data rate. For example, data rate calculator may count the number of packets in the program stream received per second and translate it into bits per second.

Time event analyzer 630 receives at least one program stream 610 (e.g., program stream 500) and/or the data rate determined by data rate calculator and determines whether a time event has occurred. The time event is a function of the program stream 500, more particularly, of the program of interest 520. If the program of interest has not yet started, that is, if the scheduled time for the start of the program of interest 520 has not yet happened, then time event analyzer 630 may detect the occurrence of time events associated with a transition from the third program stream to the program stream 500. If the scheduled time for the start of the program of interest 520 has already happened, if time event analyzer has already sent instructions to switch to program stream 500, or if the switch 227 is to start by providing program stream 500, then time event analyzer 630 may proceed to detect the occurrence of time events associated with a transition from the program stream 500 to the second program stream. Time event analyzer 630 may also be a digital circuit that compares a clock against a scheduled time event and/or compares a calculated data rate received from data rate calculator 620 against a threshold, or against a percentage drop or increase as previously described in the embodiments of content processor 225.

Content processor 600 may further include processor 640 and memory 650. In one embodiment, the components 620 and 630 of content processor 600 may be coupled to the processor 640 and the memory 650. The processor 640 may monitor and control the various hardware components for implementing the functions of components 620 and 630. In one embodiment, the processor 640 may execute software to perform various functions for components 620 and 630. In one embodiment, the components of content processor 600, including data rate calculator 620 and time event analyzer 630, may be implemented in software executed by the processor 640 and residing in the at least one memory 650.

According to one aspect of the present disclosure, an apparatus 101, 220 for providing multimedia content including a content processor 225, 600 operable to determine a data rate of a first stream of multimedia content, and a switch 227 coupled to the content processor and operable to provide the first stream of multimedia content, and provide a second stream of multimedia content in place of the first stream of multimedia content based on the data rate.

According to one embodiment, the apparatus may further include a transmitter 229 coupled to the switch 227 and operable to transmit the output of the switch 227, that is, one of the first stream and the second stream of multimedia content.

According to one embodiment of the apparatus, the switch 227 may be operable to provide the second stream of multimedia content when the data rate of the first stream substantially decreases.

According to one embodiment of the apparatus, the content processor 225, 600 may be further operable to determine when the data rate of the first stream substantially decreases, and output a first control signal 226, 660 that transitions to a first value when the data rate of the first stream substantially decreases, and the switch 227 may be further operable to receive the control signal 226, 660, and switch to the second stream of multimedia content when the first control signal 226, 660 is in the first value. The determination and the outputting may be performed by time event analyzer 630.

According to one embodiment of the apparatus, the switch 227 may be operable to provide the second stream of multimedia content further based on a first time event.

According to one embodiment of the apparatus, the content processor 225, 600 may be further operable to determine when a first time event occurs, and output a second control signal 226, 660 that has a third value before the first time event occurs and transitions to a fourth value when the first time event occurs, and the switch 227 may be further operable to receive the second control signal 226, 660, and switch to the second stream of multimedia content when the second control signal 226, 660 has the fourth value. The determination and the outputting may be performed by time event analyzer 630.

According to one embodiment of the apparatus, the first time event may be an end of a time period beginning at a start of a first program included in the first stream of multimedia content.

According to one embodiment of the apparatus, the first time event may be a first scheduled time.

According to one embodiment of the apparatus, the first scheduled time may be a scheduled beginning time of a second program included in the second stream.

According to one embodiment of the apparatus, the switch 227 may be further operable to receive the first stream of multimedia content and to receive the second stream of multimedia content.

According to one embodiment of the apparatus, the switch 227 may be further operable to, prior to providing the first stream of multimedia content, provide a third stream of multimedia content, and switch to the first stream of multimedia content based on a second event.

According to one embodiment of the apparatus, the content processor 225, 600 may be further operable to determine when the second event occurs, and output a third control signal 226, 660 that has a fifth value before the second event occurs and transitions to a sixth value when the second event occurs, and the switch 227 is further operable to receive the third control signal 226, 660, and switch to the third stream of multimedia content when the third control signal 226, 660 has the sixth value. The determination and the outputting may be performed by time event analyzer 630.

According to one embodiment of the apparatus, the second event may occur when the data rate of the first stream substantially increases.

According to one embodiment of the apparatus, the second event may be a second scheduled time.

According to one embodiment of the apparatus, the second scheduled time may be a scheduled end time of a third program included in the third stream of multimedia content, the third program ending before a start of a first program included in the first stream of multimedia content.

According to one embodiment of the apparatus, the second scheduled time may be a scheduled beginning time of a first program included in the first stream of multimedia content.

According to one embodiment of the apparatus, the switch 227 may be operable to further receive the third stream of multimedia content.

According to one embodiment of the apparatus, the third stream of multimedia content and the second stream of multimedia content are the same.

It is to be understood that in some applications, colony device 220 may not need receiver 221 and transmitter 229.

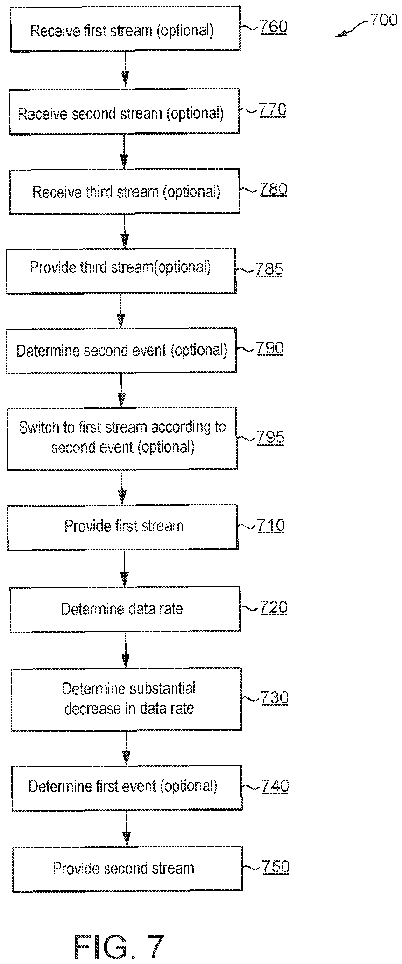

FIG. 7 illustrates a flowchart 700 of an exemplary method of providing multimedia content in accordance with one aspect of the present disclosure. The method 700 includes, at step 710, providing a first stream of multimedia content. Then, at step 720, the method includes determining a data rate of the first stream. Finally, the method includes, at step 750, providing a second stream of multimedia content in place of the first stream of multimedia content based on the data rate. The step 720 may be performed, e.g., by content processor 225, 600. In particular, the step 720 may be performed by, e.g., data rate calculator 620. The steps 710 and 750 may be performed by, e.g., switch 227. In one embodiment, the steps 710 and 750 may be performed by content processor 225, 600 which includes a switch.

According to one embodiment of the method, the step 750 of providing the second stream of multimedia content may occur when the data rate of the first stream substantially decreases.

According to one embodiment, the method may further include determining, at step 730, when the data rate of the first stream substantially decreases. The step 730 of determining may be performed by, e.g., content processor 225, 600. In particular, the step 730 may be performed by, e.g., time even analyzer 630.

According to one embodiment of the method, the step 730 of determining may further include outputting a first control signal that transitions to a first value when the data rate of the first stream substantially decreases. The step of outputting may be optional, bypassed or removed. The first control signal may be, e.g., signal 226 or 660.

According to one embodiment of the method, the step 750 of providing may further include receiving the first control signal and switching to the second stream of multimedia content when the first control signal is in the first value. The step of receiving may be optional, bypassed or removed. The first control signal may be, e.g., signal 226 or 660.

According to one embodiment of the method, the step 750 of providing the second stream of multimedia content may be further based on a first event.

According to one embodiment, the method may further include, at step 740, determining when a first event occurs. The step 740 of determining may be performed, e.g., by content processor 225, 600. In particular, step 740 may be performed by, e.g., time event analyzer 630. The step 740 of determining may be optional, bypassed or removed.

According to one embodiment of the method, the step 740 of determining may further include outputting a second control signal that has a third value before the first time event occurs and transitions to a fourth value when the first time event occurs. The step of outputting may be optional, bypassed or removed. The second control signal may be, e.g., signal 226 or 660.

According to one embodiment of the method, the step 750 of providing may further include receiving the second control signal and switching to the second stream of multimedia content when the second control signal has the fourth value. The step of receiving may be optional, bypassed or removed. The second control signal may be, e.g., signal 226 or 660.

According to one embodiment of the method, the first event may be an end of a time period beginning at a start of a first program included in the first stream of multimedia content.

According to one embodiment of the method, the first event may be a first scheduled time.

According to one embodiment of the method, the first scheduled time may be a scheduled beginning time of a second program included in the second stream.

According to one embodiment, the method may further include, at step 760, receiving the first stream of multimedia content. The step 760 of receiving may be performed by, e.g., switch 227 and/or by, e.g., content processor 225. The step 760 of receiving may be optional, bypassed or removed.

According to one embodiment, the method may further include, at step 770, receiving the second stream of multimedia content. The step 770 of receiving may be performed by, e.g., switch 227 and/or by, e.g., content processor 225. The step 770 of receiving may be optional, bypassed or removed.

According to one embodiment, the method may further include, prior to providing the first stream of multimedia content, providing a third stream of multimedia content at step 785, and switching to the first stream of multimedia content based on a second event, at step 795. The steps of 785 and 795 may be performed by, e.g., switch 227.

According to one embodiment, the method may further include, at step 790, determining when the second event occurs. The step 790 of determining may be performed, e.g., by content processor 225, 600. In particular, step 790 may be performed by, e.g., time event analyzer 630. The step 790 of determining may be optional, bypassed or removed.

According to one embodiment of the method, the step 790 of determining may further include outputting a third control signal that has a fifth value before the second event occurs and transitions to a sixth value when the second event occurs. The step of outputting may be optional, bypassed or removed. The third control signal may be, e.g., signal 226 or 660.

According to one embodiment of the method, the step 795 of switching may further include receiving the third control signal and switching to the first stream of multimedia content when the third control signal has the sixth value. The step of receiving and switching may be optional, bypassed or removed. The third control signal may be, e.g., signal 226 or 660.

According to one embodiment of the method, the second event may occur when the data rate of the first stream substantially increases.

According to one embodiment of the method, the second event may be a second scheduled time.

According to one embodiment of the method, the second scheduled time may be a scheduled end time of a third program included in the third stream of multimedia content, the third program ending before a start of a first program included in the first stream of multimedia content.

According to one embodiment of the method, the second scheduled time may be a scheduled beginning time of a first program included in the first stream of multimedia content.

According to one embodiment, the method may further include, at step 780, receiving the third stream of multimedia content. The step 780 of receiving may be performed by, e.g., switch 227 and/or by, e.g., content processor 225. The step 780 of receiving may be optional, bypassed or removed.

According to one embodiment of the method, the third stream of multimedia content and the second stream of multimedia content are the same.

It is to be understood that any of the embodiments of the method 700 described above may be implemented by the colony device 220 described in FIG. 2 (particularly content processor 225 and switch 227) and its respective embodiments.

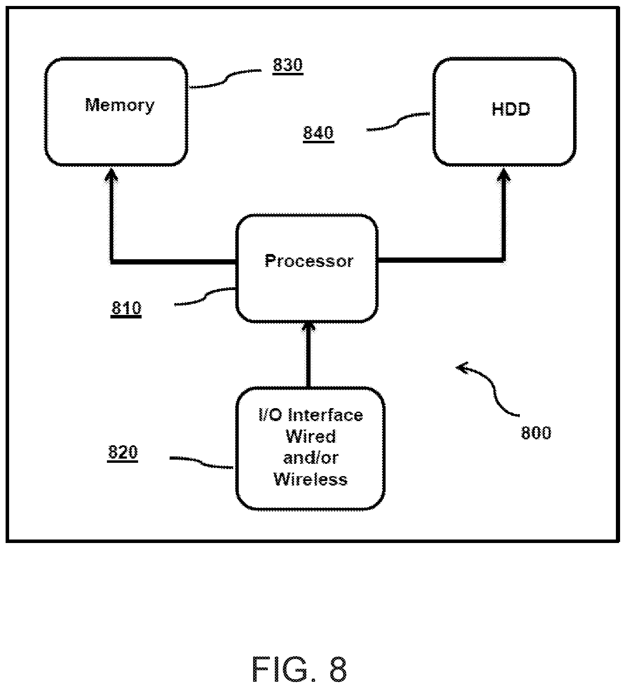

In addition, any of the embodiments of the method 700 described above may be implemented and executed by a computing system as described in FIG. 8. FIG. 8 illustrates a block diagram of an exemplary computing environment 800 according to an aspect of the present disclosure. The computing environment 800 includes a processor 810, and at least one (and preferably more than one) I/O interface 820. The I/O interface 820 can be wired or wireless and, in the wireless implementation is pre-configured with the appropriate wireless communication protocols to allow the computing environment 800 to operate on a global network (e.g., internet) and communicate with other computers or servers (e.g., cloud based computing or storage servers) so as to enable the present disclosure to be provided, for example, as a Software as a Service (SAAS) feature remotely provided to end users. One or more memories 830 and/or storage devices (Hard Disk Drive, HDD) 840 are also provided within the computing environment 800. The computing environment may be used to implement a node or device, and/or a controller or server that operates the storage system. The computing environment may be, but is not limited to, desktop computers, cellular phones, smart phones, phone watches, tablet computers, personal digital assistant (PDA), netbooks, laptop computers, set-top boxes or general multimedia content receiver and/or transmitter devices.

According to one aspect of the present disclosure, an apparatus (800) for providing multimedia content is described, the apparatus including a processor (810) in communication with at least one input/output interface (820); and at least one memory (830) in communication with the processor, the processor being configured to perform any of the embodiments of the method 700 of providing multimedia content.

Moreover, method 700 may be implemented as a computer program product comprising computer executable instructions which may be executed by a processor. The computer program product having the computer-executable instructions may be stored in the respective non-transitory computer-readable storage media of the respective above mentioned device.

According to one aspect of the present disclosure, a non-transitory computer-readable program product is provided including program code instructions for performing any of the embodiments of the method 700 of providing multimedia content.

It is important to note that one or more of the elements in the process 700 may be combined, performed in a different order, or excluded in some embodiments while still implementing the aspects of the present disclosure. For example, in one embodiment of the method 700, steps 760 and 770 may not be performed, since the first program stream is initially provided. In one embodiment of the method 700, the step 750 may not be performed since the first and second program streams may already reside in the content processor memory (e.g., 220), In one embodiment, steps 750, 760 and 770 may not be performed.

Furthermore, aspects of the present disclosure can take the form of a computer-readable storage medium. Any combination of one or more computer-readable storage medium(s) may be utilized. A computer-readable storage medium can take the form of a computer-readable program product embodied in one or more computer-readable medium(s) and having computer-readable program code embodied thereon that is executable by a computer. A computer-readable storage medium as used herein is considered a non-transitory storage medium given the inherent capability to store the information therein as well as the inherent capability to provide retrieval of the information therefrom. A computer-readable storage medium may be, for example, but is not limited to, an electronic, magnetic, optical, electromagnetic, infrared, or semiconductor system, apparatus, or device, or any suitable combination of the foregoing.

It is to be appreciated that the following list, while providing more specific examples of computer-readable storage mediums to which the present disclosure may be applied, is merely an illustrative and not exhaustive listing as is readily appreciated by one of ordinary skill in the art. The list of examples includes a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

According to one aspect of the present disclosure, a computer-readable storage medium carrying a software program is provided including program code instructions for performing any of the embodiments of the method 700 of providing multimedia content.

According to one aspect of the present disclosure, an apparatus (e.g., 101, 220, 800) for providing multimedia content including means for providing (e.g., 227, 810) a first stream of multimedia content, means for determining (e.g., 225, 600, 810) a data rate of the first stream and means for providing (e.g., 227, 810) a second stream of multimedia content in place of the first stream of multimedia content based on the data rate.

According to one embodiment, the apparatus may further include means for transmitting (e.g., 229) coupled to the means for switching or providing a second stream (e.g., 227, 810) and operable to transmit the output of the means for switching (e.g., 227, 810), that is, one of the first stream and the second stream of multimedia content.

According to one embodiment of the apparatus, the means for providing (e.g., 227, 810) a second stream may be operable to provide the second stream of multimedia content when the data rate of the first stream substantially decreases.

According to one embodiment of the apparatus, the means for determining (e.g., 225, 600, 810) may be further operable to determine when the data rate of the first stream substantially decreases. In particular, the means of determining may be, e.g., time even analyzer 630.

According to one embodiment of the apparatus, the means for determining (e.g., 225, 600, 810) may be further operable to output a first control signal that transitions to a first value when the data rate of the first stream substantially decreases. The outputting may be optional, bypassed or removed. The first control signal may be, e.g., signal 226 or 660.

According to one embodiment of the apparatus, the means for providing (e.g., 227, 810) may be further operable to receive the first control signal and switch to the second stream of multimedia content when the first control signal is in the first value. The receiving may be optional, bypassed or removed. The first control signal may be, e.g., signal 226 or 660.

According to one embodiment of the apparatus, the means for providing (e.g., 227, 810) may be operable to provide the second stream of multimedia content further based on a first event.

According to one embodiment of the apparatus, the means for determining (e.g., 225, 600, 810) may be further operable to determine when a first event occurs. In particular, the means for determining may be, e.g., time event analyzer 630. The determining may be optional, bypassed or removed.

According to one embodiment of the apparatus, the means for determining (e.g., 225, 600, 810) may be further operable to output a second control signal that has a third value before the first time event occurs and transitions to a fourth value when the first time event occurs. The outputting may be optional, bypassed or removed. The second control signal may be, e.g., signal 226 or 660.

According to one embodiment of the apparatus, the means for providing (e.g., 227, 810) may be further operable to receive the second control signal and switch to the second stream of multimedia content when the second control signal has the fourth value. The receiving may be optional, bypassed or removed. The second control signal may be, e.g., signal 226 or 660.

According to one embodiment of the apparatus, the first event may be an end of a time period beginning at a start of a first program included in the first stream of multimedia content.

According to one embodiment of the apparatus, the first event may be a first scheduled time.

According to one embodiment of the apparatus, the first scheduled time may be a scheduled beginning time of a second program included in the second stream.

According to one embodiment, the apparatus may further include means for receiving (e.g., 225, 227, 600, 810) the first stream of multimedia content. The receiving may be optional, bypassed or removed.

According to one embodiment, the apparatus may further include means for receiving (e.g., 225, 227, 600, 810) the second stream of multimedia content. The receiving may be optional, bypassed or removed.

According to one embodiment, the apparatus may further include, prior to providing the first stream of multimedia content, means for providing (e.g., 227, 810) a third stream of multimedia content and means for switching (e.g., 227, 810) to the first stream of multimedia content based on a second event.

According to one embodiment, the apparatus may further include means for determining (e.g., 225, 600, 810) when the second event occurs. In particular, the means for determining may be, e.g., time event analyzer 630. The determining may be optional, bypassed or removed.

According to one embodiment of the apparatus, the means for determining may be further operable to output a third control signal that has a fifth value before the second event occurs and transitions to a sixth value when the second event occurs. The outputting may be optional, bypassed or removed. The third control signal may be, e.g., signal 226 or 660.

According to one embodiment of the apparatus, the means for providing (e.g., 227, 810) may be further operable to receive the third control signal and switch to the first stream of multimedia content when the third control signal has the sixth value. The receiving and switching may be optional, bypassed or removed. The third control signal may be, e.g., signal 226 or 660.

According to one embodiment of the apparatus, the second event may occur when the data rate of the first stream substantially increases.

According to one embodiment of the apparatus, the second event may be a second scheduled time.

According to one embodiment of the apparatus, the second scheduled time may be a scheduled end time of a third program included in the third stream of multimedia content, the third program ending before a start of a first program included in the first stream of multimedia content.

According to one embodiment of the apparatus, the second scheduled time may be a scheduled beginning time of a first program included in the first stream of multimedia content.

According to one embodiment, the apparatus may further include means for receiving (e.g., 225, 227, 600, 810) the third stream of multimedia content. The receiving may be optional, bypassed or removed.

According to one embodiment of the apparatus, the third stream of multimedia content and the second stream of multimedia content are the same.

It is to be appreciated that the various features shown and described are interchangeable. Unless otherwise indicated, a feature shown in one embodiment may be incorporated into another embodiment. Further, the features described in the various embodiments may be combined or separated unless otherwise indicated as inseparable or not combinable.

As noted before, the functions of the various elements shown in the figures may be provided through the use of dedicated hardware as well as hardware capable of executing software in association with appropriate software. Also, when provided by a processor, the functions may be provided by a single dedicated processor, by a single shared processor, or by a plurality of individual processors, some of which may be shared.

It is to be further understood that, because some of the constituent system components and methods depicted in the accompanying drawings are preferably implemented in software, the actual connections between the system components or the process function blocks may differ depending upon the manner in which the present disclosure is programmed. Given the teachings herein, one of ordinary skill in the pertinent art will be able to contemplate these and similar implementations or configurations of the present disclosure.

Although the illustrative embodiments have been described herein with reference to the accompanying drawings, it is to be understood that the present disclosure is not limited to those precise embodiments, and that various changes and modifications may be effected therein by one of ordinary skill in the pertinent art without departing from the scope of the present disclosure. In addition, individual embodiments can be combined, without departing from the scope of the present disclosure. All such changes and modifications are intended to be included within the scope of the present disclosure as set forth in the appended claims.

The following examplary items form part of the description.
1. A method (700) comprising:
   providing (710) a first stream of multimedia content;
   determining (720) a data rate of said first stream; and
   providing (750) a second stream of multimedia content in place of said first stream of multimedia content based on said data rate.
2. The method according to item 1 wherein said providing (750) said second stream of multimedia content occurs when said data rate of said first stream substantially decreases.
3. The method according to any of the previous items wherein said providing (750) said second stream of multimedia content is further based on a first event.
4. The method according to item 3 wherein said first event is an end of a time period beginning at a start of a first program included in said first stream of multimedia content.
5. The method according to item 3 wherein said first event is a first scheduled time.
6. The method according to item 5 wherein said first scheduled time is a scheduled beginning time of a second program included in said second stream.
7. The method according to any of the previous items further comprising:
   receiving (760) said first stream of multimedia content; and
   receiving (770) said second stream of multimedia content.
8. The method according to any of the previous items further comprising, prior to providing said first stream of multimedia content:
   providing (785) a third stream of multimedia content; and
   switching (795) to said first stream of multimedia content based on a second event.
9. The method according to item 8 wherein said second event occurs when said data rate of said first stream substantially increases.
10. The method according to item 8 wherein said second event is a scheduled end time of a third program included in said third stream of multimedia content, said third program ending before a start of a first program included in said first stream of multimedia content.
11. The method according to item 8 wherein said second event is a scheduled beginning time of a first program included in said first stream of multimedia content.
12. The method according to any of the items 8-11 wherein said third stream of multimedia content and said second stream of multimedia content are the same.
13. An apparatus (101, 220) comprising:
   a content processor (225, 600) operable to:
      determine a data rate of a first stream of multimedia content; and
   a switch (227) coupled to said content processor and operable to:
      provide said first stream of multimedia content, and
      provide a second stream of multimedia content in place of said first stream of multimedia content based on said data rate.
14. The apparatus according to item 13 wherein said switch (227) is operable to provide said second stream of multimedia content when said data rate of said first stream substantially decreases.
15. The apparatus according to any of the previous items wherein said switch (227) is operable to provide said second stream of multimedia content further based on a first time event.
16. The apparatus according to item 15 wherein said first time event is an end of a time period beginning at a start of a first program included in said first stream of multimedia content.
17. The apparatus according to item 15 wherein said first time event is a first scheduled time.
18. The apparatus according to item 17 wherein said first scheduled time is a scheduled beginning time of a second program included in said second stream.
19. The apparatus according to any of the previous items wherein the switch (227) is further operable to:
   receive said first stream of multimedia content, and
   receive said second stream of multimedia content.
20. The apparatus according to any of the previous items wherein the switch (227) is further operable to, prior to providing said first stream of multimedia content:
   provide a third stream of multimedia content; and
   switch to said first stream of multimedia content based on a second event.
21. The apparatus according to item 20 wherein said second event occurs when said data rate of said first stream substantially increases.
22. The apparatus according to item 20 wherein the second event is a scheduled end time of a third program included in said third stream of multimedia content, said third program ending before a start of a first program included in said first stream of multimedia content.
23. The apparatus according to item 20 wherein the second event is a scheduled beginning time of a first program included in said first stream of multimedia content.
24. The apparatus according to any of the items 20-23 wherein said third stream of multimedia content and said second stream of multimedia content are the same.
25. An apparatus (101, 220, 800) comprising:
   means for providing (227, 810) a first stream of multimedia content;
   means for determining (225, 600, 810) a data rate of said first stream; and
   means for providing (227, 810) a second stream of multimedia content in place of said first stream of multimedia content based on said data rate.
26. A non-transitory computer-readable program product comprising program code instructions for performing the method according to any of the items 1-12.
27. A computer-readable storage medium carrying a software program comprising program code instructions for performing the method according to any of the items 1-12.

## Claims

1. A method comprising:
providing a first stream of multimedia content via a channel;
determining a data rate of said first stream; and
providing a second stream of multimedia content via the channel based on said data rate, wherein said providing said second stream of multimedia content occurs when said data rate of said first stream substantially decreases.

2. The method according to claim 1, wherein said providing said second stream of multimedia content is further based on an end of a time period beginning at a start of a first program included in said first stream of multimedia content or a scheduled beginning time of a second program included in said second stream.

3. The method according to claim 1 or 2, further comprising: receiving said first stream of multimedia content; and receiving said second stream of multimedia content.

4. The method according to any one of claims 1 to 3, further comprising, prior to providing said first stream of multimedia content: providing a third stream of multimedia content; and switching to said first stream of multimedia content when said data rate of said first stream substantially changes.

5. The method according to claim 4, wherein said third stream of multimedia content and said second stream of multimedia content are the same.

6. The method according to any one of claims 1 to 5, wherein substantially decreases includes a decrease in data rate by 200 Kbps.

7. The method according to any one of claims 1 to 5, wherein substantially decreases includes a decrease in data rate by 20%.

8. The method according to any one of claims 1 to 5, wherein substantially decreases includes a decrease in data rate below a threshold.

9. The method of claim 8, wherein the threshold is 1 Mbps.

10. An apparatus comprising:
a content processor operable to:
determine a data rate of a first stream of multimedia content; and
a switch coupled to said content processor and operable to:
provide said first stream of multimedia content, and
provide a second stream of multimedia content via a channel of said first stream of multimedia content based on said data rate, wherein said switch is operable to provide said second stream of multimedia content when said data rate of said first stream substantially decreases.

11. The apparatus according to claim 10, wherein said switch is operable to provide said second stream of multimedia content further based on an end of a time period beginning at a start of a first program included in said first stream of multimedia content or a scheduled beginning time of a second program included in said second stream.

12. The apparatus according to claim 10 or 11, wherein the switch is further operable to:
receive said first stream of multimedia content, and
receive said second stream of multimedia content.

13. The apparatus according to any one of claims 10 to 12, wherein the switch is further operable to, prior to providing said first stream of multimedia content:
provide a third stream of multimedia content; and
switch to said first stream of multimedia content based when said data rate of said first stream substantially changes.

14. An apparatus comprising:
an input/output (I/O) device; and
a processor coupled to the I/O device, the processor and I/O device operatively operating to:
receive a first stream of multimedia content; receive a second stream of multimedia content;
determine a data rate of said first stream; and
output the first stream on a channel when the determined data rate of the first stream is high;
upon a determination that the data rate of the first stream substantially decreases, output the second stream on the channel.

15. The apparatus of claim 14, wherein the processor and I/O device further operatively operate to determine the data rate of the second stream, and upon a determination that the data rate of the second stream substantially changes, switch the output on the channel to the first stream.
